# EUROPEAN PATENT SPECIFICATION

(11) **EP 3 552 928 B1**
(45) Date of publication and mention of the grant of the patent: **25.08.2021**
(21) Application number: 17877900.5
(22) Date of filing: 06.12.2017
(51) Int. Cl.: B62D 21/02, B62D 21/14, B60P 1/64, B60P 3/42

(54) **EXTENDABLE FRAME FOR INTEGRATED TRUCK-TRAILER**
AUSZIEHBARER RAHMEN FÜR INTEGRIERTEN LKW-ANHÄNGER
CADRE EXTENSIBLE POUR TRAIN ROUTIER INTÉGRÉ

(30) Priority: 08.12.2016 CN 201611122848
(43) Date of publication of application: 16.10.2019
(73) Proprietor: Technology Research and Development Center of Liaoning Dandong Xinhongyuan Agriculture Technology Development Co., Ltd., Dandong, Liaoning 118199 (CN)
(72) Inventor: ZHOU, Minghe, Dandong Liaoning 118199 (CN)
(74) Representative: Mewburn Ellis LLP
(86) International application number: PCT/CN2017/114682
(87) International publication number: WO 2018/103649

(56) References cited:
- WO-A1-2010/094935
- CN-A- 101 028 834
- CN-U- 201 670 267
- CN-U- 205 059 371
- CN-U- 206 255 069
- CN-Y- 2 597 299
- JP-A- H0 558 214
- JP-Y1- S 482 567
- US-B1- 6 558 104

## Description

### Technical Field

The present invention relates to a frame of a motor vehicle, and particularly to a telescopic frame of an integrated vehicle-tractor.

### Background

At present, the total length of a motor vehicle is changeless. A frame is not telescopic, resulting in that a vehicle can only be used for transportation and a tractor can only be used for farmland work. The existing motor vehicle cannot meet human growing work and life needs due to its present situations of single function, low utilization rate and small scope of application.

Document JP H05 58214 A discloses a telescopic frame of a vehicle, comprising a front frame, a rear frame, a telescopic hydro-cylinder, wherein the front end of the rear frame and the front frame can be inserted telescopically relatively; the front frame and the rear frame are driven to be relatively telescopic through the telescopic movement of the telescopic hydro-cylinder.

### Summary

To solve the above problems caused by that a frame of the existing motor vehicle is not telescopic and meet human work and life needs, the purpose of the present invention is to provide a telescopic frame of an integrated vehicle-tractor.

The purpose of the present invention is realized by the following technical solution: The present invention comprises a front frame, a rear frame, a frame telescopic connecting hook, a comprehensive control arm, a comprehensive control arm shaft, a comprehensive control arm hydrocylinder and a telescopic hydrocylinder, wherein the front end of the rear frame and the front frame can be inserted telescopically relatively; the rear end of the rear frame is rotatably provided with the comprehensive control arm shaft; the comprehensive control arm comprises a principal arm, a telescopic arm and a hook arm; one end of the principal arm is hinged to the comprehensive control arm shaft, and the other end is inserted with one end of the telescopic arm telescopically relatively; the other end of the telescopic arm is connected with one end of the hook arm; the other end of the hook arm is in a hooked shape; the frame telescopic connecting hook is installed on the front frame, and hooks the telescopic arm; a cylinder body of the comprehensive control arm hydrocylinder is hinged to the rear frame; a piston is hinged with the principal arm; the comprehensive control arm is driven by the comprehensive control arm hydrocylinder to turn over; the telescopic hydrocylinder is placed in the telescopic arm; the cylinder body is installed on the inner surface of the principal arm; the piston is connected with the inner surface of the telescopic arm; and the front frame and the rear frame are driven to be relatively telescopic through the telescopic movement of the telescopic hydrocylinder.

Both sides of the principal arm are symmetrically provided with bogie chutes respectively installed on the rear frame and telescopic with the rear frame; a sliding bogie is arranged between the bogie chutes on both sides; both sides of the sliding bogie are provided with pulleys that come into rolling contact with the bogie chutes; and the sliding bogie is connected with a power output shaft of the integrated vehicle-tractor. The length of the power output shaft is equal to the relatively telescopic distance of the front frame and the rear frame.

The rear end of the rear frame is provided with a plurality of bearing seats; the comprehensive control arm shaft is rotatably installed on each bearing seat; and both ends of the comprehensive control arm shaft are respectively connected with cargo carrying hopper loading/unloading traveling pulleys convenient for loading a hopper. Each end of the cargo carrying hopper loading/unloading traveling pulleys is axially limited through a pulley seat stand installed on the rear frame.

The comprehensive control arm shaft is connected with an agricultural implement lifting supporting arm for installing an agricultural implement; and the agricultural implement lifting supporting arm is connected with the turned hook arm. Both sides of the rear frame are provided with cargo carrying hopper traveling guide blocks for limiting the loaded hopper. The comprehensive control arm is positioned above the front frame and the rear frame; and one end of the hook arm is vertically connected with the other end of the telescopic arm.

The present invention has the advantages and positive effects that:
1. The present invention realizes the telescopic function of the frame of the vehicle. After elongated, the frame can carry a cargo carrying hopper for conducting various transportation operations; and after shortened, the frame can carry various agricultural implements for conducting various operations in farmlands, thereby increasing the utilization rate of the vehicle and expanding the application range.
2. The comprehensive control arm of the present invention can turn over; and through the turnover of the comprehensive control arm, after the frame is elongated, the hopper can be loaded.
3. The sliding bogie for installing various pipelines and circuits of the vehicle are disposed in the present invention. In the telescopic process of the frame, the sliding bogie remains in position, thereby preventing the pipelines and the circuits from being elongated or shortened due to telescopic movement of the frame.

### Description of Drawings

Fig. 1 is a structural top view of the present invention in an elongated state;
Fig. 2 is a structural top view of the present invention in a shortened state;
Fig. 3 is a stereographic structural schematic diagram of a front frame and a rear frame in an elongated state in the present invention;
Fig. 4 is a stereographic structural schematic diagram of a front frame and a rear frame in a shortened state in the present invention;
Fig. 5 is a structural schematic diagram when the present invention is applied to a motor vehicle in an elongated state;
Fig. 6 is a structural schematic diagram when the present invention is applied to a motor vehicle in a shortened state;
Fig. 7 is an operating state diagram of loading a hopper in the present invention; and
Fig. 8 is an operating state diagram of loading an agricultural implement in the present invention.

In the figures: 1 front frame; 2 rear frame; 3 frame telescopic connecting hook cross beam; 4 frame telescopic connecting hook; 5 principal arm; 6 telescopic arm; 7 hook arm; 8 comprehensive control arm hydrocylinder; 9 telescopic hydrocylinder; 10 hydrocylinder rod connecting shaft; 11 comprehensive control arm shaft; 12 bearing seat; 13 pulley seat stand; 14 cargo carrying hopper loading/unloading traveling pulley; 15 cargo carrying hopper traveling guide block; 16 agricultural implement lifting supporting arm; 17 pneumatic locking device; 18 frame front bar; 19 sliding bogie; 20 bogie chute; 21 power output shaft; 22 connecting seat; 23 hopper; 24 installing hole; and 25 connecting rod.

### Detailed Description

The present invention is further detailed below in combination with the drawings.

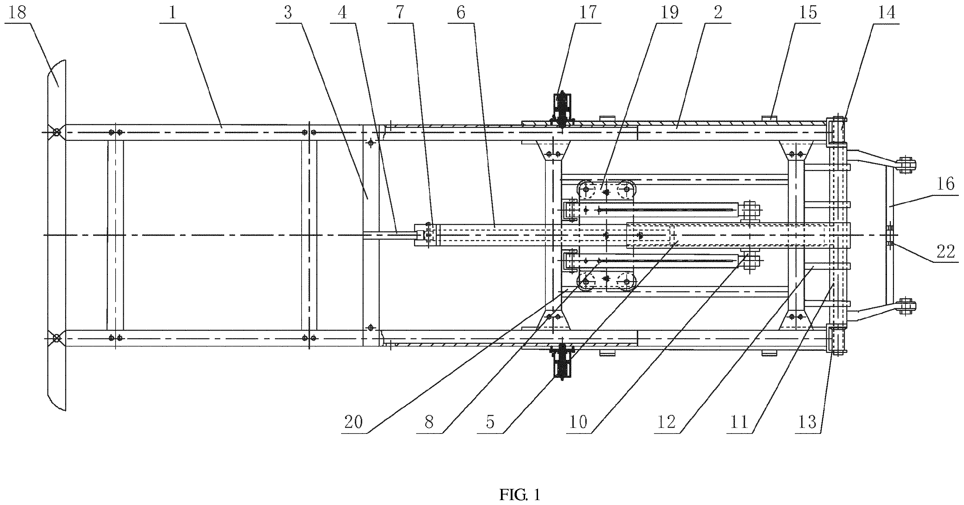

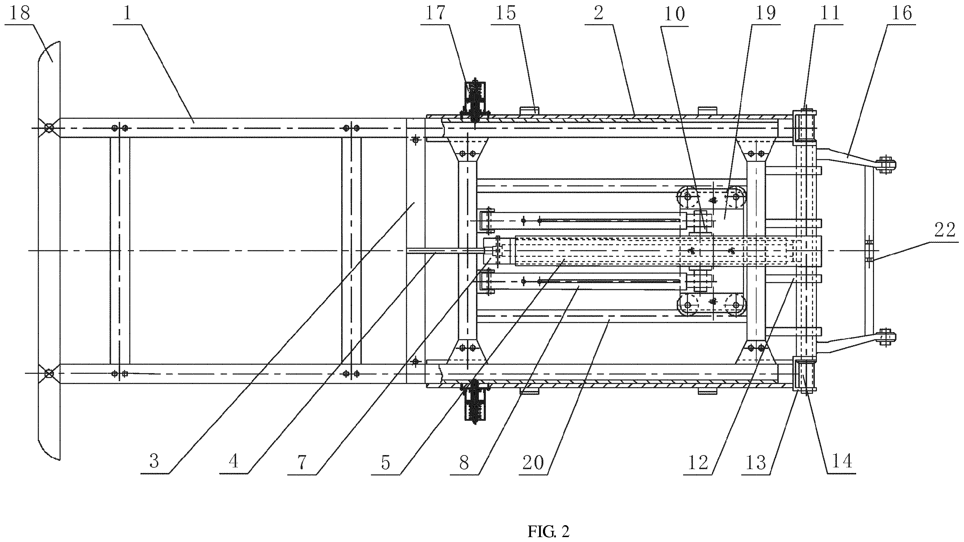

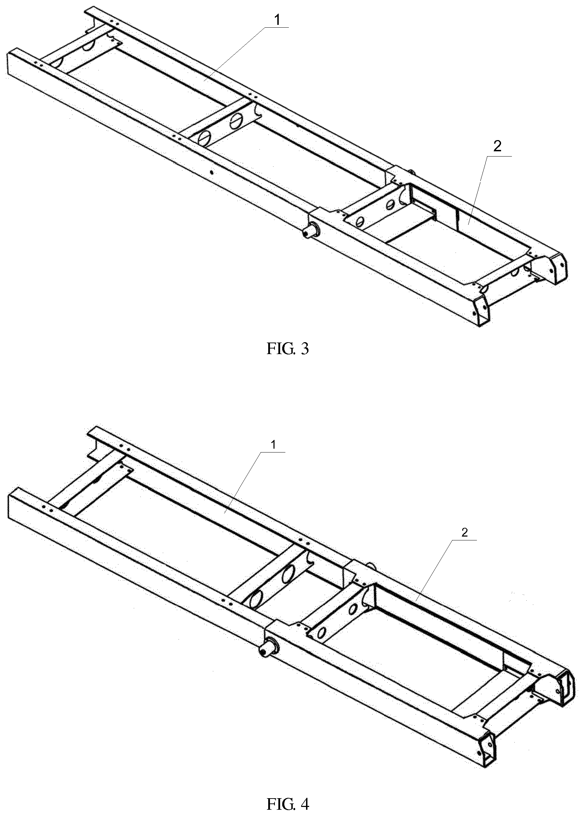

As shown in Fig. 1 to Fig. 4, the present invention comprises a front frame 1, a rear frame 2, a frame telescopic connecting hook 4, a comprehensive control arm, a comprehensive control arm shaft 11, a comprehensive control arm hydrocylinder 8 and a telescopic hydrocylinder 9, wherein the front frame 1 and the rear frame 2 are rectangular, and can be welded by a rectangular tube or U-shaped channel steel. The front end of the rear frame 2 and the rear end of the front frame 1 can be inserted telescopically relatively. The rear end of the rear frame 2 is rotatably provided with a plurality of bearing seats 12. The comprehensive control arm shaft 11 is rotatably installed on each bearing seat 12. Both ends of the comprehensive control arm shaft 11 are respectively connected with cargo carrying hopper loading/unloading traveling pulleys 14 convenient for loading a hopper 23. Each end of the cargo carrying hopper loading/unloading traveling pulleys (14) is axially limited through a pulley seat stand 13 fixed to the rear end of the rear frame 2. The pulley seat stand 13 is in a "U" shape. The "U"-shaped bottom is fixedly connected to the rear frame 2. Open ends are respectively positioned on both sides of the axial direction of each end of the cargo carrying hopper loading/unloading traveling pulleys 14. The front end of the front frame 1 is fixedly connected with a frame front bar 18.

The comprehensive control arm comprises a principal arm 5, a telescopic arm 6 and a hook arm 7; one end of the principal arm 5 is hinged to the comprehensive control arm shaft 11, and the other end is inserted with one end of the telescopic arm 6 telescopically relatively; the other end of the telescopic arm 6 is connected with one end of the hook arm 7; the other end of the hook arm 7 is in a hooked shape; An installing hole 24 used for connection is formed in the hook arm 7. The comprehensive control arm is positioned above the front frame and the rear frame 1, 2; and one end of the hook arm 7 is vertically connected with the other end of the telescopic arm 6. A frame telescopic connecting hook cross beam 3 is fixedly connected with the front frame 1, and the frame telescopic connecting hook 4 is installed on the frame telescopic connecting hook cross beam 3, and hooks the hook arm 7. Both opposite sides of the outer surface of the principal arm 5 are respectively provided with hydrocylinder rod connecting shafts 10. Both sides of the principal arm 5 are symmetrically provided with two comprehensive control arm hydrocylinders 8. A cylinder body of the comprehensive control arm hydrocylinder 8 at each side is hinged to the rear frame 2; a piston is hinged with the hydrocylinder rod connecting shaft 10 at the same side as the principal arm 5; and the comprehensive control arm is driven by the comprehensive control arm hydrocylinder 8 to turn around the comprehensive control arm shaft 11. A telescopic hydrocylinder 9 is placed in the telescopic arm 6. The cylinder body of the telescopic hydrocylinder 9 is connected with the inner surface of the principal arm 5. The piston is connected with the inner surface of the telescopic arm 6. The front frame and the rear frame 1, 2 are driven to be relatively telescopic through the telescopic movement of the telescopic hydrocylinder 9.

Both sides of the principal arm 5 are symmetrically provided with bogie chutes 20 respectively installed on the rear frame 2 and telescopic with the rear frame 2; a sliding bogie 19 is arranged between the bogie chutes 20 on both sides; and both sides of the sliding bogie 19 are provided with pulleys that come into rolling contact with the bogie chutes 20. The sliding bogie 19 is connected with a power output shaft 21 of the integrated vehicle-tractor. The length of the power output shaft 21 is equal to the relatively telescopic distance of the front frame 1 and the rear frame 2.

The comprehensive control arm shaft 11 is connected with an agricultural implement lifting supporting arm 16 for installing an agricultural implement. The agricultural implement lifting supporting arm 16 is provided with a connecting seat 22. After the comprehensive control arm is driven by the comprehensive control arm hydrocylinder 8 to turn over, the connecting seat 22 on the comprehensive control arm shaft 11 can be connected with an installing hole 24 in a hook arm 7 through a connecting rod 25. Both sides of the rear frame 2 are provided with cargo carrying hopper traveling guide blocks 15. After a hopper 23 is loaded on the comprehensive control arm, the hopper 23 is limited through the cargo carrying hopper traveling guide blocks 15 on both sides.

Both sides of the rear frame 2 are respectively provided with pneumatic locking devices 17. Keyholes are formed in the inserted parts of the front frame and the rear frame 1, 2. After the front frame and the rear frame 1, 2 are telescopic to positions, the front frame and the rear frame 1, 2 are inserted into the keyholes and are automatically self-locked through the pneumatic locking devices 17, preventing the front frame and the rear frame 1, 2 from moving.

The present invention has the operating principle that:
The present invention is applied to an integrated vehicle-tractor, and has an elongated state and a shortened state.

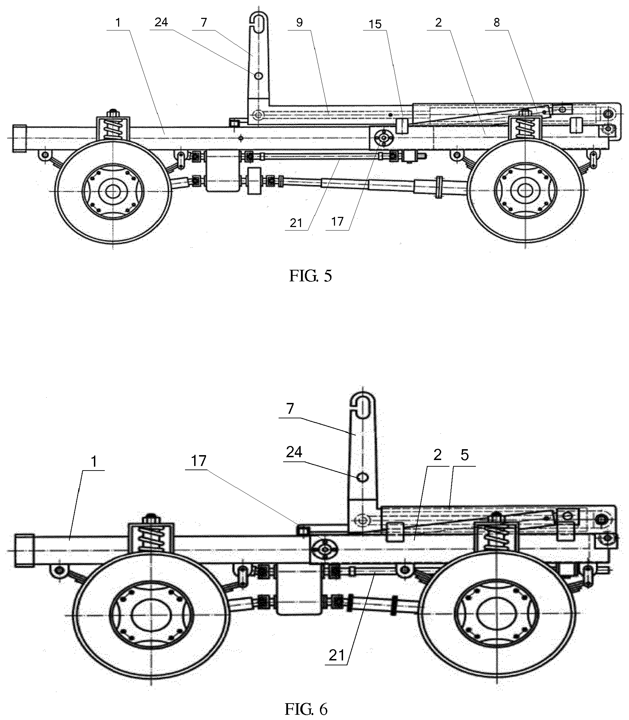

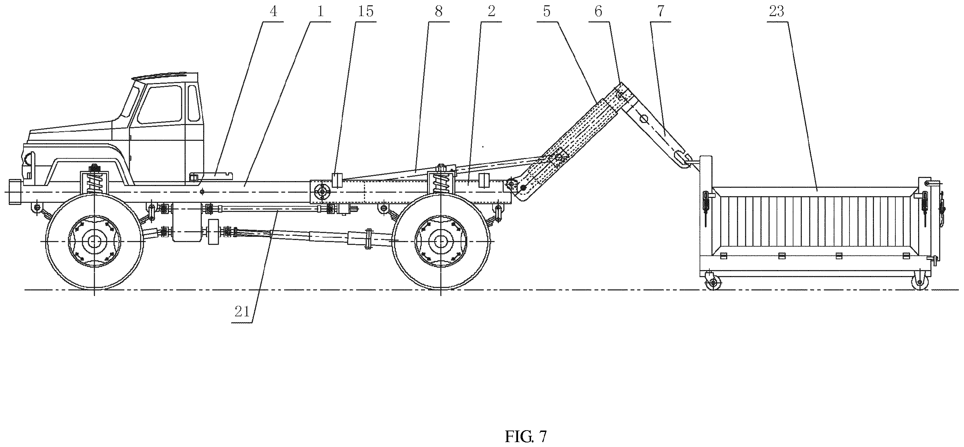

As shown in Fig. 5, the telescopic arm 6 in the comprehensive control arm is hooked with the frame telescopic connecting hook 4 installed on the front frame 1. The cylinder body and the piston of the telescopic hydrocylinder 9 are respectively connected with the principal arm 5 and the telescopic arm 6. When the frame needs to be elongated, the telescopic hydrocylinder 9 is operated; power is transmitted to the comprehensive control arm shaft 11 through the principal arm 5; and the rear frame 2 is driven by the comprehensive control arm shaft 11. At the same time, the power is transmitted to a frame telescopic connecting hook cross beam 3 through the telescopic arm 6 and the frame telescopic connecting hook 4; and the front frame 1 is driven by the frame telescopic connecting hook cross beam 3 to realize relative elongation of the front frame and the rear frame 1, 2. Because the relative elongation distance of the front frame and the rear frame 1, 2 is equal to the length of the power output shaft 21, the sliding bogie 19 remains in position in the elongation process and the bogie chutes 20 move with the rear frame 2 relative to the sliding bogie 19. The sliding bogie 19 is connected with rear wheel brake pipelines, and vehicle illuminating lamps, direction indicator lamps, license lamps, stop lamps and other electrical lines at the tail of the vehicle. Because the sliding bogie 19 remains in position in the telescopic process of the front frame and the rear frame 1, 2, the pipelines and the electrical lines may not be elongated. As shown in Fig. 7, after the frame is elongated, the comprehensive control arm can be driven by the comprehensive control arm hydrocylinders 8 to turn over. When the comprehensive control arm needs to be turned over, the frame telescopic connecting hook 4 moves down from the telescopic arm 6. The comprehensive control arm hydrocylinders 8 on both sides are synchronously operated, and the comprehensive control arm is driven to turn around the comprehensive control arm shaft 11. After the comprehensive control arm is turned to the position, the comprehensive control arm hydrocylinders 8 stop the operation. The hopper 23 is hung to the hook on the other end of the hook arm 7. Then, the comprehensive control arm hydrocylinders 8 are retracted backwards and are matched with the elongation of the telescopic arm 6. The hopper 23 is loaded to the frame through the comprehensive control arm. In the process of loading the hopper 23, the cargo carrying hopper loading/unloading traveling pulleys 14 on both sides of the rear part of the rear frame 2 come into rolling contact with the hopper 23, which is convenient for loading and unloading of the hopper 23. After the hopper 23 is loaded onto the frame, the cargo carrying hopper traveling guide blocks 15 on both sides of the rear frame 2 can prevent the hopper 23 from shaking left and right, so as to limit the hopper 23. When the hopper 23 is unloaded, the comprehensive control arm hydrocylinders 8 on both sides are synchronously operated. The comprehensive control arm is driven to turn around the comprehensive control arm shaft 11. In the turning process, the hopper 23 is driven to gradually fall from the frame and come into contact the ground. When the hopper 23 forms an angle of 45 degrees with the principal arm 5, the hopper 23 can unload.

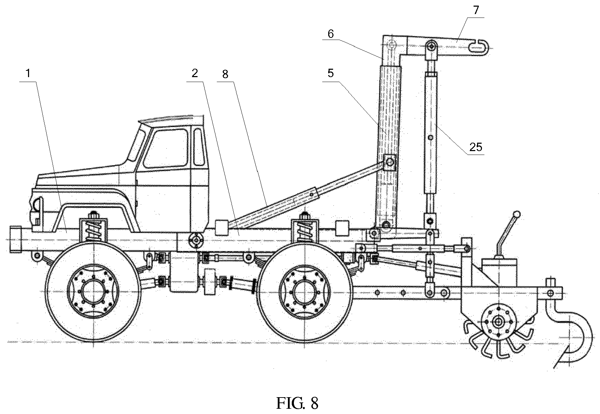

As shown in Fig. 6, when the frame needs to be shortened, the telescopic hydrocylinder 9 is operated; power is transmitted to the comprehensive control arm shaft 11 through the principal arm 5; and the rear frame 2 is driven by the comprehensive control arm shaft 11. At the same time, the power is transmitted to a frame telescopic connecting hook cross beam 3 through the telescopic arm 6 and the frame telescopic connecting hook 4; and the front frame 1 is driven by the frame telescopic connecting hook cross beam 3 to realize relative shortening of the front frame and the rear frame 1, 2. Because the relative shortening distance of the front frame and the rear frame 1, 2 is equal to the length of the power output shaft 21, the sliding bogie 19 remains in position in the shortening process and the bogie chutes 20 move with the rear frame 2 relative to the sliding bogie 19. The pipelines and the electrical lines on the sliding bogie 19 may not be shortened. After the frame is shortened, various agricultural implements can also be loaded through the agricultural implement lifting supporting arm 16. As shown in Fig. 8, the comprehensive control arm hydrocylinders 8 on both sides are synchronously operated. The comprehensive control arm is driven to turn around the comprehensive control arm shaft 11 and is matched with the shortening of the telescopic arm 6. When the principal arm 5 is vertical to the frame, the agricultural implement lifting supporting arm 16 is connected to the installing hole 24 in the hook arm 7 through the connecting rod 25, and a corresponding agricultural implement is installed on the agricultural implement lifting supporting arm 16.

## Claims

1. A telescopic frame of an integrated vehicle-tractor, comprising a front frame (1), a rear frame (2), a frame telescopic connecting hook (4), a comprehensive control arm, a comprehensive control arm shaft (11), a comprehensive control arm hydrocylinder (8) and a telescopic hydrocylinder (9), wherein the front end of the rear frame (2) and the front frame (1) can be inserted telescopically relatively; the rear end of the rear frame (2) is rotatably provided with the comprehensive control arm shaft (11); the comprehensive control arm comprises a principal arm (5), a telescopic arm (6) and a hook arm (7); one end of the principal arm (5) is hinged to the comprehensive control arm shaft (11), and the other end is inserted with one end of the telescopic arm (6) telescopically relatively; the other end of the telescopic arm (6) is connected with one end of the hook arm (7); the other end of the hook arm (7) is in a hooked shape; the frame telescopic connecting hook (4) is installed on the front frame (1), and hooks the telescopic arm (6); a cylinder body of the comprehensive control arm hydrocylinder (8) is hinged to the rear frame (2); a piston is hinged with the principal arm (5); the comprehensive control arm is driven by the comprehensive control arm hydrocylinder (8) to turn over; the telescopic hydrocylinder (9) is placed in the telescopic arm (6); the cylinder body is installed on the inner surface of the principal arm (5); the piston is connected with the inner surface of the telescopic arm (6); and the front frame and the rear frame (1, 2) are driven to be relatively telescopic through the telescopic movement of the telescopic hydrocylinder (9).

2. The telescopic frame of the integrated vehicle-tractor according to claim 1, wherein both sides of the principal arm (5) are symmetrically provided with bogie chutes (20) respectively installed on the rear frame (2) and telescopic with the rear frame (2); a sliding bogie (19) is arranged between the bogie chutes (20) on both sides; both sides of the sliding bogie (19) are provided with pulleys that come into rolling contact with the bogie chutes (20); and the sliding bogie (19) is connected with a power output shaft (21) of the integrated vehicle-tractor.

3. The telescopic frame of the integrated vehicle-tractor according to claim 2, wherein the length of the power output shaft (21) is equal to the relatively telescopic distance of the front frame (1) and the rear frame (2).

4. The telescopic frame of the integrated vehicle-tractor according to claim 1, wherein the rear end of the rear frame (2) is provided with a plurality of bearing seats (12); the comprehensive control arm shaft (11) is rotatably installed on each bearing seat (12); and both ends of the comprehensive control arm shaft (11) are respectively connected with cargo carrying hopper loading/unloading traveling pulleys (14) convenient for loading a hopper (23).

5. The telescopic frame of the integrated vehicle-tractor according to claim 4, wherein each end of the cargo carrying hopper loading/unloading traveling pulleys (14) is axially limited through a pulley seat stand (13) installed on the rear frame (2).

6. The telescopic frame of the integrated vehicle-tractor according to claim 1 or 4, wherein the comprehensive control arm shaft (11) is connected with an agricultural implement lifting supporting arm (16) for installing an agricultural implement; and the agricultural implement lifting supporting arm (16) is connected with the turned hook arm (7).

7. The telescopic frame of the integrated vehicle-tractor according to claim 1, wherein both sides of the rear frame (2) are provided with cargo carrying hopper traveling guide blocks (15) for limiting the loaded hopper (23).

8. The telescopic frame of the integrated vehicle-tractor according to claim 1, wherein the comprehensive control arm is positioned above the front frame and the rear frame (1, 2); and one end of the hook arm (7) is vertically connected with the other end of the telescopic arm (6).

## Patentansprüche

1. Teleskoprahmen einer integrierten Fahrzeug-Zugmaschine, umfassend einen Vorderrahmen (1), einen Rückrahmen (2), einen Rahmenteleskopverbindungshaken (4), einen übergreifenden Steuerarm, eine übergreifende Steuerarmwelle (11), einen übergreifenden Steuerarmhydrozylinder (8) und einen Teleskophydrozylinder (9), wobei das Vorderende des Rückrahmens (2) und der Vorderrahmen (1) relativ zueinander teleskopisch eingeführt werden können; das rückseitige Ende des Rückrahmens (2) drehbar mit der übergreifenden Steuerarmwelle (11) bereitgestellt ist; wobei der übergreifende Steuerarm einen Hauptarm (5), einen Teleskoparm (6) und einen Hakenarm (7) umfasst; wobei ein Ende des Hauptarms (5) an die übergreifende Steuerarmwelle (11) angelenkt ist und das andere Ende mit einem Ende des Teleskoparms (6) relativ zueinander teleskopisch eingeführt ist; wobei das andere Ende des Teleskoparms (6) mit einem Ende des Hakenarms (7) verbunden ist; wobei das andere Ende des Hakenarms (7) eine Hakenform aufweist; wobei der Rahmenteleskopverbindungshaken (4) auf dem Vorderrahmen (1) angebracht ist und in den Teleskoparm (6) einhakt; wobei ein Zylinderkörper des übergreifenden Steuerarmhydrozylinders (8) an den Rückrahmen (2) angelenkt ist; wobei ein Kolben an den Hauptarm (5) angelenkt ist; wobei der übergreifende Steuerarm durch den übergreifenden Steuerarmhydrozylinder (8) angetrieben wird, um zu verschwenken; wobei der Teleskophydrozylinder (9) in dem Teleskoparm (6) angeordnet ist; wobei der Zylinderkörper auf der Innenoberfläche des Hauptarms (5) angebracht ist; wobei der Kolben mit der Innenoberfläche des Teleskoparms (6) verbunden ist; und wobei der Vorderrahmen und der Rückrahmen (1, 2) angetrieben werden, um durch die teleskopische Bewegung des Teleskophydrozylinders (9) relativ teleskopisch zu sein.

2. Teleskoprahmen der integrierten Fahrzeug-Zugmaschine nach Anspruch 1, wobei beide Seiten des Hauptarms (5) symmetrisch mit Rollenbockführungen (20) bereitgestellt sind, die jeweils auf dem Rückrahmen (2) angebracht und teleskopisch mit dem Rückrahmen (2) sind; wobei ein Gleitrollenbock (19) zwischen den Rollenbockführungen (20) auf beiden Seiten angeordnet ist; wobei beide Seiten des Gleitrollenbocks (19) mit Rollen bereitgestellt sind, die in Rollkontakt mit den Rollenbockführungen (20) kommen; und wobei der Gleitrollenbock (19) mit einer Leistungsabtriebswelle (21) der integrierten Fahrzeug-Zugmaschine verbunden ist.

3. Teleskoprahmen der integrierten Fahrzeug-Zugmaschine nach Anspruch 2, wobei die Länge der Leistungsabtriebswelle (21) gleich dem relativen Teleskopabstand des Vorderrahmens (1) und des Rückrahmens (2) ist.

4. Teleskoprahmen der integrierten Fahrzeug-Zugmaschine nach Anspruch 1, wobei das rückseitige Ende des Rückrahmens (2) mit einer Vielzahl von Lagersitzen (12) bereitgestellt ist; wobei die übergreifende Steuerarmwelle (11) drehbar auf jedem Lagersitz (12) angebracht ist; und wobei beide Enden der übergreifenden Steuerarmwelle (11) jeweils mit Auflade-/Abladefahrrollen (14) eines eine Ladung tragenden Containers verbunden sind, die zum Aufladen eines Containers (23) geeignet sind.

5. Teleskoprahmen der integrierten Fahrzeug-Zugmaschine nach Anspruch 4, wobei jedes Ende der Auflade-/Abladelaufrollen (14) eines eine Ladung tragenden Containers durch einen Rollensitzbock (13), der auf dem Rückrahmen (2) angebracht ist, axial begrenzt ist.

6. Teleskoprahmen des integrierten Fahrzeug-Zugmaschine nach Anspruch 1 oder 4, wobei die übergreifende Steuerarmwelle (11) mit einem Hebe-Tragarm (16) eines landwirtschaftlichen Arbeitsgeräts zum Anbringen eines landwirtschaftlichen Arbeitsgeräts verbunden ist; und wobei der Hebe-Tragarm (16) eines landwirtschaftlichen Arbeitsgeräts mit dem geschwenkten Hakenarm (7) verbunden ist.

7. Teleskoprahmen der integrierten Fahrzeug-Zugmaschine nach Anspruch 1, wobei beide Seiten des Rückrahmens (2) mit Fahrführungsblöcken (15) eines eine Ladung tragenden Containers zum Begrenzen des aufgeladenen Containers (23) bereitgestellt sind.

8. Teleskoprahmen der integrierten Fahrzeug-Zugmaschine nach Anspruch 1, wobei der übergreifende Steuerarm über dem Vorderrahmen und dem Rückrahmen (1, 2) angeordnet ist; und wobei ein Ende des Hakenarms (7) vertikal mit dem anderen Ende des Teleskoparms (6) verbunden ist.

## Revendications

1. Cadre télescopique d'un véhicule-tracteur intégré, comprenant un cadre avant (1), un cadre arrière (2), un crochet de connexion télescopique de cadre (4), un bras de commande complet, un arbre de bras de commande complet (11), un hydrocylindre de bras de commande complet (8) et un hydrocylindre télescopique (9), dans lequel l'extrémité avant du cadre arrière (2) et le cadre avant (1) peuvent être insérés de manière télescopique de manière relative ; l'extrémité arrière du cadre arrière (2) est pourvue de manière rotative de l'arbre de bras de commande complet (11) ; le bras de commande complet comprend un bras principal (5), un bras télescopique (6) et un bras de crochet (7) ; une première extrémité du bras principal (5) est articulée à l'arbre de bras de commande complet (11), et l'autre extrémité est insérée avec une première extrémité du bras télescopique (6) de manière télescopique de manière relative ; l'autre extrémité du bras télescopique (6) est reliée à une première extrémité du bras de crochet (7) ; l'autre extrémité du bras de crochet (7) est en forme de crochet ; le crochet de connexion télescopique de cadre (4) est installé sur le cadre avant (1), et accroche le bras télescopique (6) ; un corps de cylindre de l'hydrocylindre de bras de commande complet (8) est articulé au cadre arrière (2) ; un piston est articulé avec le bras principal (5) ; le bras de commande complet est entraîné par l'hydrocylindre de bras de commande complet (8) pour retournement ; l'hydrocylindre télescopique (9) est placé dans le bras télescopique (6) ; le corps de cylindre est installé sur la surface interne du bras principal (5) ; le piston est relié à la surface interne du bras télescopique (6) ; et le cadre avant et le cadre arrière (1, 2) sont entraînés pour être relativement télescopiques par le déplacement télescopique de l'hydrocylindre télescopique (9).

2. Cadre télescopique du véhicule-tracteur intégré selon la revendication 1, dans lequel les deux côtés du bras principal (5) sont munis symétriquement de goulottes de bogie (20) respectivement installées sur le cadre arrière (2) et télescopiques avec le cadre arrière (2) ; un bogie coulissant (19) est agencé entre les goulottes de bogie (20) sur les deux côtés ; les deux côtés du bogie coulissant (19) sont munis de poulies qui viennent en contact roulant avec les goulottes de bogie (20) ; et le bogie coulissant (19) est connecté à un arbre de sortie de puissance (21) du véhicule-tracteur intégré.

3. Cadre télescopique du véhicule-tracteur intégré selon la revendication 2, dans lequel la longueur de l'arbre de sortie de puissance (21) est égale à la distance télescopique de manière relative du cadre avant (1) et du cadre arrière (2).

4. Cadre télescopique du véhicule-tracteur intégré selon la revendication 1, dans lequel l'extrémité arrière du cadre arrière (2) est pourvue d'une pluralité de sièges de palier (12) ; l'arbre de bras de commande complet (11) est installé de manière rotative sur chaque siège de palier (12) ; et les deux extrémités de l'arbre de bras de commande complet (11) sont respectivement connectées à des poulies de déplacement de chargement/déchargement de trémie de transport de cargaison (14) appropriées pour charger une trémie (23).

5. Cadre télescopique du véhicule-tracteur intégré selon la revendication 4, dans lequel chaque extrémité des poulies de déplacement de chargement/déchargement de trémie de transport de cargaison (14) est limitée axialement à travers un support de siège de poulie (13) installé sur le cadre arrière (2).

6. Cadre télescopique du véhicule-tracteur intégré selon la revendication 1 ou 4, dans lequel l'arbre de bras de commande complet (11) est relié à un bras de support de levage d'équipement agricole (16) pour installer un équipement agricole ; et le bras de support de levage d'équipement agricole (16) est relié au bras de crochet tourné (7) .

7. Cadre télescopique du véhicule-tracteur intégré selon la revendication 1, dans lequel les deux côtés du cadre arrière (2) sont munis de blocs de guidage de déplacement de trémie de transport de cargaison (15) pour limiter la trémie chargée (23).

8. Cadre télescopique du véhicule-tracteur intégré selon la revendication 1, dans lequel le bras de commande complet est positionné au-dessus du cadre avant et du cadre arrière (1, 2) ; et une extrémité du bras de crochet (7) est reliée verticalement à l'autre extrémité du bras télescopique (6) .
